# DEMANDE DE BREVET EUROPEEN

(11) **EP 1 936 986 A2**
(43) Date de publication de la demande: **25.06.2008**
(21) Numéro de dépôt: 07123709.3
(22) Date de dépôt: 19.12.2007
(51) Int. Cl.: H04N 7/173

(54) **Procédé de communication interactive entre terminaux de communication, serveur et reseau de télévision interactive**

(30) Priorité: 21.12.2006 FR 0655785
(71) Demandeur: Alcatel Lucent, 75008 Paris (FR)
(72) Inventeur: Marilly, Emmanuel, 91240, Saint Michel sûr Orge (FR); Delegue, Gérard, 94230, Cachan (FR); Martinot, Olivier, 91210, Draveil (FR)
(74) Mandataire: Hedarchet, Stéphane

(57) **Abrégé**

Procédé de communication interactive entre terminaux de communication, ce procédé comprenant :
- une étape de définition des caractéristiques des personnes avec lesquelles un initiateur de session souhaite avoir une communication interactive, l'ensemble de ces personnes formant une communauté virtuelle avec cet initiateur ;
- une étape de définition, pour la session de communications interactives, du média d'interactions initial entre l'initiateur de session et les autres membres de la communauté virtuelle;
- une étape d'envoi, par l'initiateur de session, d'une requête de connexion aux terminaux des autres membres de la communauté virtuelle
ce procédé étant caractérisé en ce qu'il comprend une étape de définition des règles d'adaptation du média de communication en fonction du contexte propre à au moins un des membres de la communauté, en particulier l'initiateur de session,

## Description

L'invention a trait au domaine technique de la télévision interactive.

Le terme « interactif » est difficile à définir, parce qu'il s'applique à de nombreux produits en rapide évolution.

Pour les échanges interhumains, le terme « interactif » est employé lorsque les intervenants s'influencent mutuellement par leur dialogue.

Pour les échanges homme/machine, le terme « interactif » est employé pour les conditions d'exploitations qui permettent des actions réciproques en mode dialogué ou en temps réel. Par exemple, une machine reçoit des informations d'un utilisateur et lui répond. Pour l'e-formation (*e-learning*), le formé intervient au cours de son processus d'apprentissage et entraîne, par cette intervention, une modification de cet apprentissage.

La télévision interactive comprend un canal retour *(back channel)* permettant au spectateur d'adresser au fournisseur de contenu *(content provider*) des informations ou des requêtes. Le contenu télévisé traditionnel se trouve ainsi complété accès à des liens vers des sites Internet, télécommerce (*T-commerce*), télévision à la demande (*Video On Demand*), guide électronique des programmes (*Electronic Program Guide*).

La télévision devient ainsi un appareil électronique numérique grand public.

Le canal retour peut être apparent à l'écran du téléviseur (par exemple par un écran séparé *split screen*), l'utilisaleur communiquant à l'aide de sa télécommande et de son décodeur (*set top* box) ou d'un dispositif incorporé *(built in)* par exemple IST (*Integrated Smart Television*).

L'expression « télévision interactive » (*interactive television*) est employée pour désigner des réalites assez différentes.

Ainsi, l'expression « télévision interactive » a pu être employée pour désigner le fait qu'un télèspectateur peut choisir entre différents contenus d'un bouquet numérique, à l'aide d'un guide électronique des programmes (*EPG Electronic Program Guide*).

L'expression « télévision interactive » a également été utilisée pour désigner l'accès à Internet à partir d'un décodeur ad hoc *(WebTv).*

La réalité des services proposés sous l'étiquette « Télévision interactive » peut être présentée suivant deux angles : le contenu des services d'une part et le type d'interactivité d'autre part.

Pour ce qui est du contenu des services, peuvent être distingués :
- la télévision enrichie (*enhanced TV*);
- la télévision participative (*call TV*) ;
- la télévision interactive autonome,

Pour la télévision enrichie, des services sont proposés en complément au programme télédiffusé. Des informations additionnelles sont envoyées au spectateur par exemple via l'intervalle de suppression de trame du signal télé (*Vertical Blanking Interval*) et/ou via des lignes téléphoniques. Ces informations additionnelles peuvent être du texte, des graphiques et des images fixes concernant la programmation, du contenu web activè par des déclencheurs, un nouveau volet audio et vidéo, ou bien encore une vision personnalisée (angle de caméra). A titre d'exemple, la chaîne Equidia propose aux abonnés disposant d'un terminal numérique connecté à une ligne téléphonique d'ouvrir un compte et de parier à domicile sur toutes les courses de chevaux diffusées. L'information délivrée peut être liée ou non au programme en cours de diffusion. La télévision enrichie ne permet pas une communication entre les personnes regardant un même programme.

Pour la télévision participative, un service de communication permet à un téléspectateur d'intervenir sur le contenu d'un programme diffusé pendant ou en dehors des temps d'antenne. Par exemple, la société Tatamia Solutions propose une plateforme *Tatamia Interactive Channel* permettant la diffusion de SMS (*Short Message Service*) en direct sur les écrans. Le téléspectateur peut par exemple choisir le clip vidéo qui sera diffusé pendant une émission et le dédicacer en clavardant (*chat*) avec ses amis. Les spectateurs peuvent également voter ou participer à un concours, par exemple lors d'émissions dites de télé réalité.

Un service de télévision interactive autonome ne comporte aucun service de télévision à titre principal ou accessoire. Il s'agit notamment de services transactionnels tels que banque à domicile, petites annonces. Le récepteur de télévision peut aussi par exemple être utilisé comme terminal de réception de messages entre abonnés (par exemple *TV mail* de la société TPS) : lorsqu'un abonné reçoit un nouveau message, il est automatiquement prévenu en bas de l'écran, lorsqu'il change de chaîne. Le récepteur de télévision peut également servir d'écran pour jeux interactifs proposés par une chaîne virtuelle.

Pour ce qui est du type d'interactivité, on distingue l'interactivité simulée, l'interactivité déportée et l'interactivité réelle.

Lorsque l'interactivité est simulée, les applications et données sont intégrées dans le flux vidéo diffusé, en une seule fois ou en boucle. Les services sont mis a disposition soit en temps réel sur sélection du téléspectateur, soit par stockage sur le disque dur qui permet une interactivité locale.

Lorsque l'interactivité est déportée, il y a échange de données entre le diffuseur et le téléspectateur au moyen d'un équipement indépendant du réseau de diffusion des contenus. A titre d'exemple, un parieur peut avoir accès à son compte par l'intermédiaire de la ligne téléphonique à laquelle est raccordée le décodeur.

L'interactivité est dite réelle lorsque le réseau de diffusion de services intègre une voie de retour permanente.

L'un des attraits de l'interactivité est de renforcer les liens entre personnes distantes, de sorte à créer des communautés virtuelles (par exemple groupe d'amis, membre d'une famille, personnes partageant les mêmes centres d'intérêt).

La vie de telles communautés virtuelles serait facilitée par l'existence de moyens de communication instantanée performants.

Dans cet esprit, on connaît par exemple les messageries instantanées telles que Windows Live Messenger, Yahoo!Messenger. Goggle Talk, ICQ, Livecom, AOL Instant Messenger. Ces logiciels propriétaires ont été développés pour ordinateurs fixes ou certains terminaux mobiles (PDA *Personal Digital Assistant)* et ne sont en général pas compatibles entre eux.

La messagerie mobile instantanée a également fait l'objet d'initiatives (*Mobile Instant Messaging and Presence Services IMPS*), sans aboutir pour l'instant à des services interopérables, qui permettraient le remplacement des SMS (*Short Message Services*) et MMS (*Multimedia Message Service*) par la messagerie instantanée pour les terminaux de communications portables intelligents (*smartphone*).

La demanderesse a par ailleurs développé une technologie de télévision interactive appelée Amigo TV permettant à l'utilisateur de partager au sein d'une communauté des opinions et des émotions. Lorsque plusieurs amis regardent le même programme de télévision, ils peuvent, grâce à Amigo TV, le commenter en direct entre eux, leurs voix passant par Internet, six personnes pouvant communiquer en même temps. Pour savoir qui est branché sur son téléviseur et la chaîne qu'il regarde, il suffit de consulter à l'aide de sa télécommande un menu ou toutes ces informations s'affichent en temps réel, la présence des membres de la communauté étant indiquée par avatars en surimpression. AmigoTV permet également d'envoyer des images et des sons choisis au sein d'un catalogue, pour illustrer son humeur en réaction à un événement, télévisé AmigoTV ne nécessite pas d'employer un clavier ou une souris. La technologie AmigoTV nécessite toutefois casque, microphone, téléviseur et décodeur.

L'invention vise à offrir aux membres d'une communauté des services de communication interactive dans un environnement de télévision mobile, ces services facilitant les échanges entre personnes proches.

Par « proches », on désigne ici une au moins des caractéristiques suivantes :
- les personnes se trouvent géographiquement proches les unes des autres ;
- les personnes ont sensiblement la même activité lorsqu'elles décident de communiquer entre elles ;
- les personnes ont sensiblement les mêmes centres d'intérêts ;
- les personnes ont accès à des moyens de télécommunications comparables ou compatibles.

Les moyens de communication interactive selon l'invention doivent permettre aux membres d'une communauté d'échanger des messages instantanés, mais aussi de clavarder, et d'échanger des données vocales ou vidéos associées aux programmes de télévision diffusés sur leurs terminaux mobiles.

Les services de communications offerts par l'invention doivent permettre aux membres d'une communauté de s'échanger des mimiques (*emoticons*) et de ameuter entre eux.

A ces fins, l'invention se rapporte, selon un premier aspect, à un procédé de communication interactive entre terminaux de communication, ce procédé comprenant :
- une étape de définition des caractéristiques des personnes avec lesquelles un initiateur de session souhaite avoir une communication interactive, l'ensemble de ces personnes formant une communauté virtuelle avec cet initiateur ;
- une étape de définition, pour la session de communications interactives, du média d'interactions initial entre l'initiateur de session et les autres membres de la communauté virtuelle ;
- une étape d'envol, par l'initiateur de session, d'une requête de connexion aux terminaux des autres membres de la communauté virtuelle,
ce procédé comprenant une étape de définition des règles d'adaptation du média de communication en fonction du contexte propre à au moins un des membres de la communauté, en particulier l'initiateur de session.

Avantageusement, le procédé comprend, pendant la session de communication interactives, l'affichage de programmes télévisuels sur au moins un des terminaux de communications de la communauté virtuelle, en particulier le terminal de communication de l'initiateur de session. Il est entendu toutefois que l'initiateur de session peut souhaiter ouvrir une session d'interactions sans devoir préalablement être en cours de visionnage d'une émission télèvisuelle. Par exemple, une personne pourra annoncer son souhait d'une session de communications interactives lors d'une émission à venir, et les membres de la communauté pourront discuter entre eux des modalités de cette session (horaires, média de communication choisi par exemple).

Avantageusement, la définition des caractéristiques des personnes entre lesquelles la communication interactive est prévue tient compte de la localisation des personnes, notamment localisation géographique. Une communauté virtuelle peut ainsi être définie en fonction du lieu où se trouvent ses membres, ou de leur destination commune par exemple.

Avantageusement, la définition des caractéristiques des personnes entre lesquelles la communication interactive est prévue tient compte du profil des personnes, notamment leurs centres d'intérêts et le type de relations entretenues avec l'initiateur. Parmi ses relations, l'initiateur de session pourra par exemple sélectionner ceux pouvant être intéressés par un programme télévisé dont la diffusion est annoncée ou en cours.

Avantageusement, la définition des caractéristiques des personnes entre lesquelles la communication interactive est prévue tient compte des capacités des terminaux de communication détenues par ces personnes.

L'invention se rapporte, selon un deuxième aspect, à un serveur de communication interactive pour la mise en oeuvre du procédé tel que présenté ci-dessus, ce serveur comprenant un module règle d'adaptation contenant les règles d'adaptation du service, ces règles étant prédéfinies ou créées par l'opérateur ou l'initiateur de session, le serveur comprenant en outre un moteur en charge de configurer, gérer, et adapter le service de communication interactive en fonction du contexte propre à au moins un des membres de la communauté virtuelle, notamment l'initiateur de session.

Avantageusement, le serveur comprend en outre un module convertisseur de média, en charge de la cohérence des médias choisis par chacun des membres de la communauté virtuelle pour leurs communications interactives.

Avantageusement, le serveur comprend en outre un module profil de l'utilisateur dans la communauté contenant les régles génériques de la communauté basées sur le profil de l'initiateur de session.

Avantageusement, le serveur comprend en outre un module communauté de proximité contenant la liste des personnes qui sont dans le voisinage de l'initiateur de session.

Avantageusement, le serveur comprend en outre un module liste d'amis contenant la liste des amis de l'initiateur de session.

L'invention se rapporte, selon un troisième aspect, à un réseau de communication interactive comprenant au moins un serveur tel que présenté ci dessus, dans lequel au moins un des terminaux de communication, notamment le terminal de communication de l'initiateur de session, est un terminal de télécommunications mobile.

D'autres objets et avantages de l'invention apparaîtront à la lumière de la description faite ci-après en référence aux dessins annexés dans lesquels ;
- la figure 1 est une vue schématique d'ensemble des moyens de l'invention, dans une réalisation ;
- la figure 2 est une vue schématique plus détaillée d'une partie des moyens mis en oeuvre dans l'invention.

L'invention fournit un service de communication interactive pour une communauté dans un environnement de télévision mobile.

Ce service est appelé service intelligent de clavardage pour télévision mobile (*mobile smart chat TV service*) par la suite service MSCTV. Ainsi qu'il apparaîtra par la suite, le terme clavardage utilisé en messagerie instantanée, désigne dans le cadre de l'invention non seulement des échanges de texte, mais aussi le cas échéant des échanges de sons, images, vidéos, ou fichiers.

Ce service MSCTV permet des discussions entre membres d'une communauté par des textes, de la voix, ou de la vidéo, ainsi que l'échange de mimiques (*emoticons*), d'états émotionnels et d'attitudes intellectuelles (*moods*), lorsque les membres de cette communauté (par exemple des amis) regardent le même programme de télévision sur leur terminal mobile, ou utilisent la même application interactive mobile.

Ces échanges sont intégrés dans l'écran du terminal mobile, et le service MSCTV peut utiliser les interfaces du terminal mobile (par exemple microphone, caméra, clavier).

Le service MSCTV tient compte du contexte, de la localisation, et du profil de l'utilisateur ainsi que des membres de la communauté.

Par « contexte » on désigne ici notamment ;
- l'environnement dans lequel sont placés les membres de la communauté (par exemple lieu privé, lieu public, ambiance bruyante ou silencieuse),
- le type de réseau (largeur de bande, qualité de service) ;
- les capacités des terminaux de communication des membres de la communauté (taille de l'écran, média supporté, type de terminal),
- le contexte dans lequel a lieu la session de communication interactive (activités des membres de la communauté, évènements),
- le contexte social (les autres membres de la communauté sont ils à ranger pour l'utilisateur parmi les amis, les neutres, les ennemis, les voisins, les collègues de travail ou des relations) ;
- le contexte personnel (humeur des membres de la communauté, agressivité, stress),
- le programme de télévision sélectionné.

Par « localisation » on désigne non seulement la localisation géographique, mais aussi d'autres paramètres relatifs à leurs mouvements : destination, vitesse de déplacement.

Par « profil de l'utilisateur » on désigne ici notamment la description de cet utilisateur, ses préférences, ses droits, et des données historiques.

L'effet de l'environnement sur le service MSCTV peut être illustré de la manière suivante : un membre de la communauté commence ses échanges avec les autres membres de la communauté en mode voix et passe en mode texte lorsqu'il entre dans un lieu public ou pénétré dans une ambiance bruyante. Par exemple, Bob est seul dans un compartiment de train et utilise le service MSCTV en regardant un match de football sur son terminal mobile. Etant seul dans son compartiment. Bob discute avec ses amis en mode voix. Lorsqu'une personne entre s'asseoir dans le compartiment, Bob décide de poursuivre la conversation avec ses amis sans gêner cette personne. Bob décide de passer du mode voix au mode texte. En fonction de conditions spécifiques, le passage du mode voix au mode texte peut être automatique, par exemple passage du mode texte au mode voix lorsque pour un membre de la communauté doit conduire un véhicule au cours d'une session d'échanges.

L'effet des terminaux sur le service MSCTV peut être illustré de la manière suivante. Lors d'une session MSCTV, l'un des membres A de la communauté utilise un média différent de celui choisit par les autres membres B, C, D pour interagir. Par exemple, cet utilisateur A emploie la voix alors que les autres membres B, C, D de la communauté utilisent du texte pour communiquer. Une synthèse vocale permet une communication des autres membres B, C, D de la communauté vers l'utilisateur A, tandis qu'un dispositif de reconnaissance vocale permet à l'utilisateur A de communiquer vers les autres membres B, C, D de la communauté.

Le déploiement de la MSCTV peut être effectué sur les éléments existants du réseau mobile.

Pour la télévision sur terminal mobile, plusieurs standards sont proposés aujourd'hui : MPEG-4 BIFS, MPEG-LASeR (*Lightweight Application Scene Representation,* mis en avant par Streamezzo), SVG *(Scalable Vector Graphics,* mis en avant par le W3C *World Wide Web Consortium),* MORE *(Mobile Open Rich-Media Environment,* mis en avant par la société Nokia). Pour la diffusion de la télévision sur terminal mobile tel que téléphone UMTS (*Universal Mobile Telecommunications System*), une cellule supporte un petit nombre de sessions multimédia simultanées haut débit, typiquement 256kbit/s. Cette capacité sera sans doute améliorée par l'arrivée de l'HSDPA (*High* Speed *Downlink Packet Access*) ou du 3GLTE (*3GPP Long Term Evolution*). La solution « broadcast » ne présente pas cette limitation, trois technologies de diffusion de télévision vers les terminaux mobiles étant possibles :
- le MBMS (*Multimédia Broadcast*/*Multicast Service),* extension de l'UMTS ;
- les réseaux digitaux terrestres tels que DVB-H (Digital *Video Broadcast transmission to Handhled terminals*). T-DMB (*Terrestrial Digital Multimedia Broadcasting*), Media-Flo (*Media Forward Link Only*) et le réseau japonais ISDB-T ;
- les réseaux hybrides satellites/terrestres tels que S-DMB en Corée, MobaHO ! au Japon ou DVB-H adapté à la bande S tel que développé par la demanderesse, permettant une capacité de 5 à 11 Mbits/s (8 MHz), et 20 à 30 canaux, à comparer aux 3 canaux à 256 kbits/s du MBMS.

Le service MSCTV peut être déployé par exemple via le canal de diffusion employant le DVB-H, le canal retour utilisant le réseau 3G.

Dans une autre mise en oeuvre, le service MSCTV est intégré dans un environnement IMS (*IP Multimedia Subsystem*). L'intégration dans une solution IMS offre tous les avantages fournis par un environnement IMS tel que AAC, GLMS (*Group List Management Server*), HSS (*Home Subscriber Server,* par exemple profil de l'utilisateur), communications (messagerie unifiée, courrier voix et vidéo, portail voix et vidéo, conférences).

Le déploiement sur réseau fixe ou fixe/mobile peut aussi être envisagé.

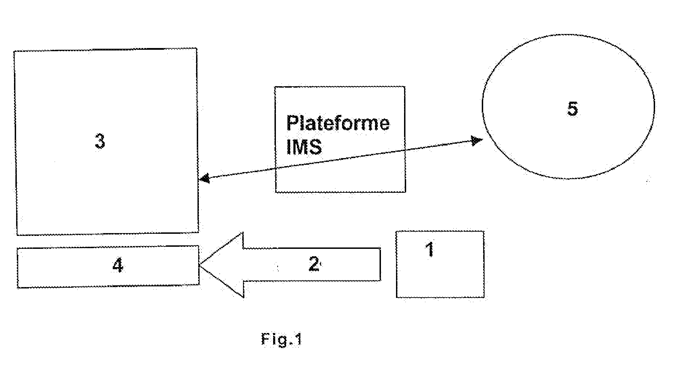

La figure 1 montre une mise en place d'un service MSCTV dans un environnement IMS.

Un programme de télévision 1 est diffusé en utilisant le réseau 2, par exemple DVB-H.

L'utilisateur final 3 décide d'avoir une discussion à l'aide du service MSCTV avec une communauté (amis, personnes localisées dans une même zone géographique, personnes ayant le même profil),

L'utilisateur final 3 choisit une rège prédéfinie ou définit lui-même ses règles pour la sélection des membres de la communauté.

L'utilisateur final 3 contacte, à l'aide de son terminal 4, un serveur 5 pour appliquer ces règles prédéfinies ou pour mettre en place ses propres règles.

Par exemple, l'utilisateur final 3 choisit l'option « discussion avec les personnes se trouvant à proximité ». L'utilisateur final reçoit alors une liste de personnes qui se trouvent à proximité et peut choisir celles avec lesquelles il ne souhaite pas interagir.

L'utilisateur final peut également choisir des règles automatiques à mettre en oeuvre si le contexte change : par exemple passer du mode voix au mode texte lorsque l'on entre dans un lieu public.

Lorsque la configuration de la session est établie, le service MSCTV est opérationnel et les interactions peuvent commencer. L'adaptation du service sera effectuée tout au long de la session.

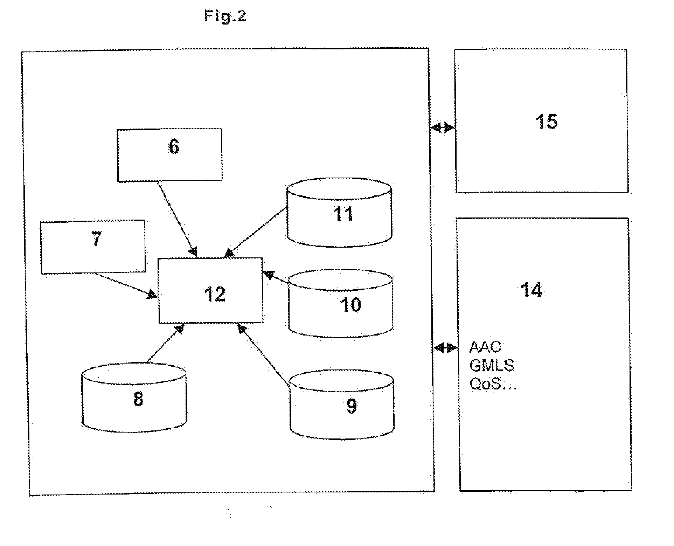

La figure 2 est une description schématique du serveur MSCTV.

Ce serveur comprend plusieurs modules.

Le module règle d'adaptation 6 contient les règles d'adaptation du service prèdèfinies ou créées par l'opérateur ou l'utilisateur final.

Le module convertisseur de media 7 est en charge de la cohérence des médias entre les membres de la communauté. Par exemple, si des membres de la communauté utilisent la voix alors que d'autres utilisent le texte, le module convertisseur de média 7 assurera que tous les membres de la communauté peuvent interagir entre eux. Par exemple, ce module 7 sera en charge de la conversion de données texte en voix (par exemple par synthèse vocale) ou voix en texte (reconnaissance de voix).

Le module règle de communauté 8 contient des règles spécifiques à la communauté. Ces règles sont définies par l'opérateur ou par l'utilisateur final,

Le module profil de l'utilisateur dans la communauté 9 contient les règles génériques de la communauté basées sur le profil de l'utilisateur. Il fournit des listes de personnes qui ont un profil voisin ou semblable à celui de l'utilisateur final.

Le module communauté de proximité 10 contient la liste des personnes qui sont dans le voisinage de l'utilisateur final. Différentes règles peuvent être définies par l'utilisateur final ou l'opérateur. Des règles de bases concernant la proximité (par exemple périmètre) ou des règles plus contextuelles (personnes se trouvant dans le même train, le même bus) peuvent être définies.

Le module liste d'amis 11 contient la liste des amis de l'utilisateur final. Cette liste est crée par l'utilisateur final.

Le moteur 12 du service MSCTV est en charge de configurer, gérer, et adapter le service MSCTV. Ce moteur assure la gestion des différents modules 6-11 constituant le service MSCTV.

Le serveur 13 du service MSCTV est interfacé avec des enablers 14 de l'environnement IMS tels que présence, GLMS, AAC, QoS.

Le serveur 13 est également en interface avec des applications de communication 15.

L'utilisation du service MSCTV va maintenant être présentée,

Jean regarde un match de football sur son terminal mobile. Il décide d'avoir une conservation avec ses amis à l'aide du service MSCTV. Il lance l'application MSCTV. Plusieurs options lui sont proposées. Jean peut avoir une communication avec ses amis (ou une sélection d'entre eux), par exemple les personnes situées dans un même lieu (par exemple le même train, le même bus). Jean peut aussi sélectionner les personnes ayant le même profil que lui (ou un profil proche de son profil). Jean peut aussi sélectionner des personnes ayant un profil particulier.

Jean choisit d'avoir une conversation à l'aide du service MSCTV avec ses amis qui regardent le même programme de télévision. La conversation à l'aide du service MSCTV peut être réalisée par échanges de textes, de voix, de vidéo, et ou d'images/sons/icônes interactives. Jean choisit d'avoir une conservation vidéo.

La discussion et les commentaires lors du match de football sont alors possibles entre les membres de la communauté. Des icônes et des animations peuvent être échangées et apparaître sur les écrans de télévision des amis de sorte à décrire leurs humeurs et émotions respectives.

Un scénario d'utilisation du service MSCTV est par exemple le suivant.

Dans une première étape, Bart décide de regarder un match de football sur son terminal mobile. Il choisit alors d'activer le service MSCTV pour avoir une discussion avec d'autres personnes. Bart accède alors au guide des services. Dans ce guide, plusieurs options sont proposées, par exemple : guide des programmes, vote, clavardage.

Dans une deuxième étape, Bart choisit l'option clavardage.

Dans une troisième étape, Bart configure la session de service MSCTV. Les critères suivants lui sont proposés : filtrage des personnes formant la communauté (amis, proximité, profils), sélection des médias, règles d'adaptation lors de la session. Bart définit les critères de la communauté, sélectionne les médias utilisés pour interagir, et les règles d'adaptation.

Dans une quatrième étape, le service MSCTV est alors fonctionnel. Bart peut voir les personnes connectées (par exemple par des icônes, des photographies). En plus d'images vidéo, Bart peut envoyer des textes et des icônes à ses amis.

En variante, Bart utilise un terminal de communication mobile comprenant une caméra et choisit d'interagir ave ses amis à l'aide de la voix et de la vidéo. Lorsque Bart entre dans un lieu public, grâce aux règles d'adaptation, il passe automatiquement du mode voix au mode texte et ses paroles apparaissent sur les écrans des autres membres de la communauté, dans une fenêtre ou en surimpression.

Le service de communication interactive selon l'invention présente de nombreux avantages :
- gestion de la communauté intégrant le contexte ;
- adaptation du service au contexte (par exemple environnements variés), aux performances des réseaux et des terminaux, ainsi qu'aux médias utillsés (texte, voix, vidéo) ;
- offre de nouveaux services pour la télévision mobile.

Avec le service MSCTV les membres d'une même communauté qui regardent le même programme de télévision peuvent interagir au travers de média et d'applications variées, Une communauté peut être créée sur la base de critères variés : personnes ayant les mêmes profils et centre d'intérêts par exemple, proximité géographique. Les critères de création d'une communauté peuvent être choisis par un utilisateur final ou un opérateur. Le service MSCTV peut être intégré à un module de gestion de communauté ou être interfacé à un tel module.

## Revendications

1. Procédé de communication interactive entre terminaux de communication, ce procédé comprenant :
- une étape de définition des caractéristiques des personnes avec lesquelles un initiateur de session souhaite avoir une communication interactive, l'ensemble de ces personnes formant une communauté virtuelle avec cet initiateur ;
- une étape de définition, pour la session de communications interactives, du média d'interactions initial entre l'initiateur de session et les autres membres de la communauté virtuelle ;
- une étape d'envoi, par l'initiateur de session, d'une requête de connexion aux terminaux des autres membres de la communauté virtuelle,
ce procédé étant **caractérisé en ce qu'**il comprend une étape de définition des règles d'adaptation du média de communication en fonction du contexte propre à au moins un des membres de la communauté, en particulier l'initiateur de session.

2. Procédé de communication interactive selon la revendication 1, **caractérisé en ce qu'**il comprend, pendant la session de communication interactives, l'affichage de programmes télévisuels sur au moins un des terminaux de communications de la communauté virtuelle, en particulier le terminal de communication de l'initiateur de session.

3. Procédé de communication selon la revendication 1 ou 2, **caractérisé en ce que** la définition des caractèristiques des personnes entre lesquelles la communication interactive est prévue tient compte de la localisation des personnes, notamment localisation géographique.

4. Procédé de communication selon l'une quelconque des revendications 1 à 3, **caractérisé en ce que** la définition des caractéristiques des personnes entre lesquelles la communication interactive est prévue tient compte du profil des personnes, notamment leurs centres d'intérêts et le type de relations entretenues avec l'initiateur.

5. Procédé de communication selon l'une quelconque des revendications précédentes, **caractérisé en ce que** la définition des caractéristiques des personnes entre lesquelles la communication interactive est prévue tient compte des capacités des terminaux de communication détenues par ces personnes.

6. Serveur de communication interactive pour la mise en oeuvre du procédé tel que présenté dans l'une quelconque des revendications 1 à 5, ce serveur comprenant un module règle d'adaptation (6) contenant les règles d'adaptation du service, ces règles étant prédèfinies ou créées par l'opérateur ou l'initiateur de session, le serveur comprenant en outre un moteur (12) en charge de configurer, gérer, et adapter le service de communication interactive en fonction du contexte propre à au moins un des membres de la communauté virtuelle, notamment l'initiateur de session.

7. Serveur selon la revendication 6, **caractérisé en ce qu'**il comprend en outre un module convertisseur de media (7), en charge de la cohèrence des médias choisis par chacun des membres de la communauté virtuelle pour leurs communications interactives.

8. Serveur selon la revendication 6 ou 7, **caractérisé en ce qu'**il comprend en outre un module profil de l'utilisateur dans la communauté (9) contenant les régles génériques de la communauté basées sur le profil de l'initiateur de session.

9. Serveur selon l'une quelconque des revendications 6 à 8, **caractérisé en ce qu'**il comprend en outre un module communauté de proximité (10) contenant la liste des personnes qui sont dans le voisinage de l'initiateur de session.

10. Serveur selon l'une quelconque des revendications 6 à 9, **caractérisé en ce qu'**il comprend en outre un module liste d'amis (11) contenant la liste des amis de l'initiateur de session.

11. Réseau de communication interactive comprenant au moins un serveur tel que présenté dans l'une quelconque des revendications 6 à 10, **caractérisé en ce qu'**au moins un des terminaux de communication, notamment le terminal de communication de l'initiateur de session, est un terminal de télécommunications mobile.
